# EUROPEAN PATENT SPECIFICATION

(11) **EP 3 012 234 B1**
(45) Date of publication and mention of the grant of the patent: **31.05.2017**
(21) Application number: 15185165.6
(22) Date of filing: 15.09.2015
(51) Int. Cl.: C03B 7/16, C03B 7/20, C03B 7/14, C03B 9/40

(54) **A DISPENSER FOR GOBS OF MOLTEN GLASS FOR HOLLOW-GLASS FORMING MACHINES**
SPENDER FÜR POSTEN AUS GESCHMOLZENEM GLAS FÜR HOHLGLASFORMUNGSMASCHINEN
DISTRIBUTEUR DE PRÉ-FORMES EN VERRE FONDU POUR MACHINES DE FORMAGE DE VERRE CREUX

(30) Priority: 20.10.2014 IT TO20140850
(43) Date of publication of application: 27.04.2016
(73) Proprietor: BDF Industries S.P.A., 36100 Vicenza (IT)
(72) Inventor: SCHIAVO, William, 36100 Vicenza (IT); VANZIN, Cristian, 31049 Valdobbiadene (Treviso) (IT)
(74) Representative: De Bonis, Paolo

(56) References cited:
- EP-B1- 2 051 949
- DE-A1- 2 501 109
- JP-A- H01 270 522

## Description

### TEXT OF THE DESCRIPTION

### Field of the invention

The present invention relates to dispensers for gobs of molten glass for hollow-glass forming machines, in particular of the type including:
- a support frame; and
- a plurality of distributor scoops carried by the above support frame and mounted oscillating about corresponding axes of rotation, wherein each of the aforesaid distributor scoops is configured for receiving a gob of molten glass and for conveying the gob of molten glass to corresponding parison moulds of a hollow-glass forming machine.

Dispensers of the above type are known, for example, from documents EP 2 051 949 B1, EP 0 202 116 B1, DE 25 01 109 A1, and JP H01 270 522 A.

### Description of prior art and general technical problem

Hollow-glass forming machines, i.e., machines for the production of hollow articles made of glass, such as bottles or similar containers, generally include a top hopper, which contains molten glass material and from which a stream of molten glass is fed, which is sheared to form gobs of pre-set volume using a shearing device generally referred to as "feeder".

Located downstream of the shearing device is a gob-dispensing device, generally including one or more distributor scoops configured for conveying the gobs of molten glass into parison moulds where a parison of the container is obtained, which is then subjected to a subsequent operation of forming in a further mould set immediately downstream.

Each dispensing device in general comprises from one to four scoops made of metal material (typically aluminium), each of which gives out in correspondence of inlet troughs of corresponding parison moulds, and which are driven in rotation about a corresponding axis so as to feed sequentially the corresponding set of parison moulds.

This means that each scoop has a pendular motion of an intermittent and sequential type along an array of inlet troughs of parison moulds, which is governed by means of a motor assembly and a mechanical transmission.

The motion is such that each parison mould, with one to four cavities, is supplied at predetermined intervals (hence intermittently) depending upon the motion of the distributor scoop or scoops.

Several examples of dispensers for gobs of molten glass of a known type envisage operation of all the distributor scoops by means of a single motor assembly. If on one hand this may prove convenient as far as constructional simplicity is concerned, on the other hand it precludes the possibility of regulating the position of each distributor scoop independently.

Preclusion of this possibility constitutes a serious limit of performance for the forming machine as a whole for a number of reasons. For instance, it is altogether common for the centre-to-centre distance between the inlet cavities of the parison moulds to be different from the centre-to-centre distance between the scoops for distributing the gobs of molten glass. This imposes the need for the set of the supply scoops to be governed so as to be arranged in a divergent manner (if the centre-to-centre distance between the parison moulds is greater than the centre-to-centre distance of the feeder) or a convergent manner (if the centre-to-centre distance between the parison moulds is smaller than the centre-to-centre distance of the feeder).

This is in itself already sufficient to highlight how a dispenser of a known type with just a single operation for all the distributor scoops is unable to guarantee always an optimal alignment between the scoops and the inlet cavities of the parison moulds, imposing the need to accept an error in the delivery path of the gobs.

Furthermore, as anticipated, the inlet cavities of the parison moulds are generally extended outwards via troughs arranged according to a fan-like arrangement converging towards the outlets of the distributor scoops so as to limit as far as possible the movement of the distributor scoops during feed of the parison moulds located in the outermost position in the array.

This means that the troughs associated to the moulds in the outermost positions of the array are (in top plan view) more inclined and closer to one another than the troughs associated to parison moulds in a central position in the array.

Furthermore, possible errors of positioning due to non-independent operation of the distributor scoops have a more marked impact (in relative terms) in the peripheral areas of the array of parison moulds, with consequent need for corrections and reduction of the processing speed.

A solution to the aforesaid technical drawbacks may be identified in the glass-gob distributor forming the subject of the document No. EP 2 051 949 B1, which envisages independent operation for each distributor scoop. However, the possible benefits deriving from the independent operation taught in this document are in practice jeopardized by the characteristics of the transmissions that connect the distributor scoops to the motors that drive them.

In particular, the document No. EP 2 051 949 B1 envisages a transmission of motion from the motors to the distributor scoops by means of a kinematic chain including a cogged belt, a ballscrew, which receives its motion through said cogged belt, and a rack carried by the ballscrew, that meshes with a pinion connected in rotation to the corresponding scoop.

The person skilled in the art will appreciate that in the aforesaid kinematic chain different motion transmission mechanisms coexist, which all together (as well as - in some cases - individually) give rise to a transmission with extremely poor dynamic characteristics.

The flexibility of operation that is provided by the aforesaid independent control of the distributor scoops is substantially neutralized by an extremely poor controllability and precision of positioning in the case where the dispenser has to operate at high processing rates (from 120 to 170 sheared gobs per minute, which today represents a standard in the hollow-glass forming industry). The dynamic stiffness of the kinematic chain illustrated in the above document degrades in fact in a way proportional to the increase of the processing rate, and also the positioning precision degrades therewith.

It should in fact be borne in mind that during the operation each distributor scoop is subject to an extremely high number of arrests, resumptions, and reversals of motion, during which each transmission is subject to stresses of an impulsive and/or non-stationary nature. The frequencies typical of these stresses are such as to result in repeated lengthening and contraction of the cogged belt of an amplitude considerably higher than the intrinsic errors of positioning of the system, without considering the fact that these movements turn into corresponding rotational motions of the ballscrew, with consequent undesirable operation of the scoops.

However, the presence of three different mechanisms of transmission of the motion (cogged belt, ballscrew, and pinion-rack meshing) is accompanied with as many possible sources of operating play, of a degree and nature different from one another, each of which requires a specific compensation in order to prevent onset of further irregularities in operation.

### Object of the invention

The object of the present invention is to overcome the technical problems mentioned previously. In particular, the object of the invention is to provide a dispenser for gobs of molten glass for a hollow-glass forming machine in which it is possible to achieve - at the same time - a high flexibility of operation and an equally high precision of operation at any processing rate.

### Summary of the invention

The object of the invention is achieved by a dispenser for gobs of molten glass for hollow-glass forming machines having the features forming the subject of one or more of the ensuing claims, which form an integral part of the technical disclosure herein herein in relation to the invention.

In particular, the object of the invention is achieved by a dispenser for gobs of molten glass for hollow-glass forming machines having all the features listed at the beginning of the present description and characterized in that it includes a plurality of motors configured for operating the above plurality of distributor scoops about the corresponding axes of rotation and in that each motor of the aforesaid plurality is operatively connected for operation to at least one distributor scoop of the aforesaid plurality of distributor scoops.

### Brief description of the drawings

The invention will now be described with reference to annexed figures, which are provided purely by way of non-limiting example and wherein:
- Figure 1 is a perspective view of a dispenser for gobs of molten glass according to a preferred embodiment of the invention;
- Figure 2 is a perspective view according to the arrow II of Figure 1;
- Figure 3 is a perspective view according to the arrow III of Figure 1 with some components removed;
- Figure 4 is a cross section according to the trace IV-IV of Figure 1; and
- Figure 5 is a view according to the trace V-V of Figure 1.

### Detailed description

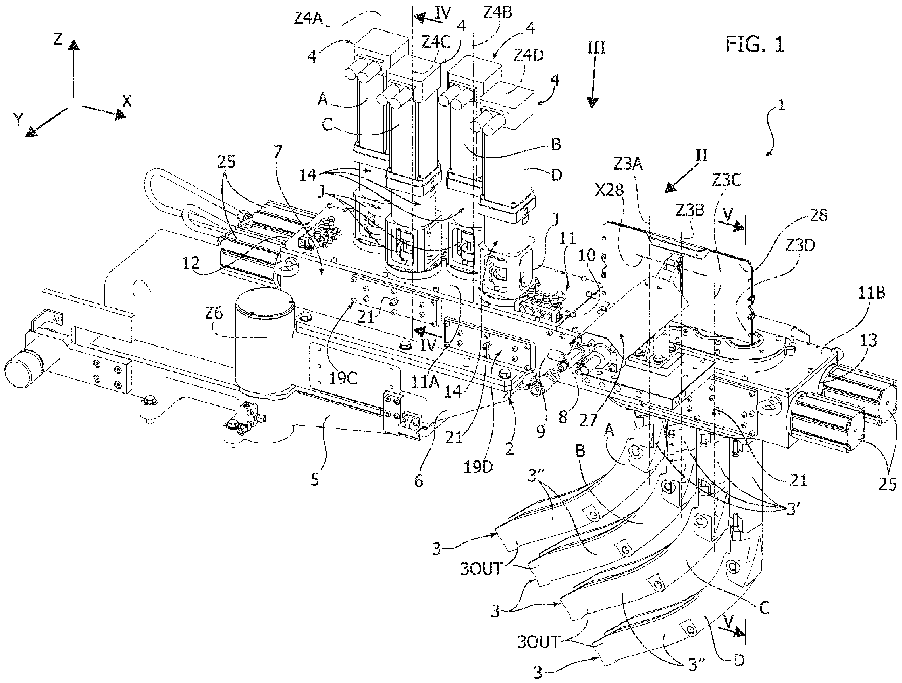

In Figure 1, the reference number 1 designates as a whole a dispenser for gobs of molten glass for hollow-glass forming machines according to a preferred embodiment of the invention. The dispenser 1 includes a supporting frame 2 carrying a plurality of scoops 3 for distributing gobs of molten glass and a plurality of motors 4, preferably electric motors, which are configured for operating the plurality of scoops 3 about corresponding axes of rotation.

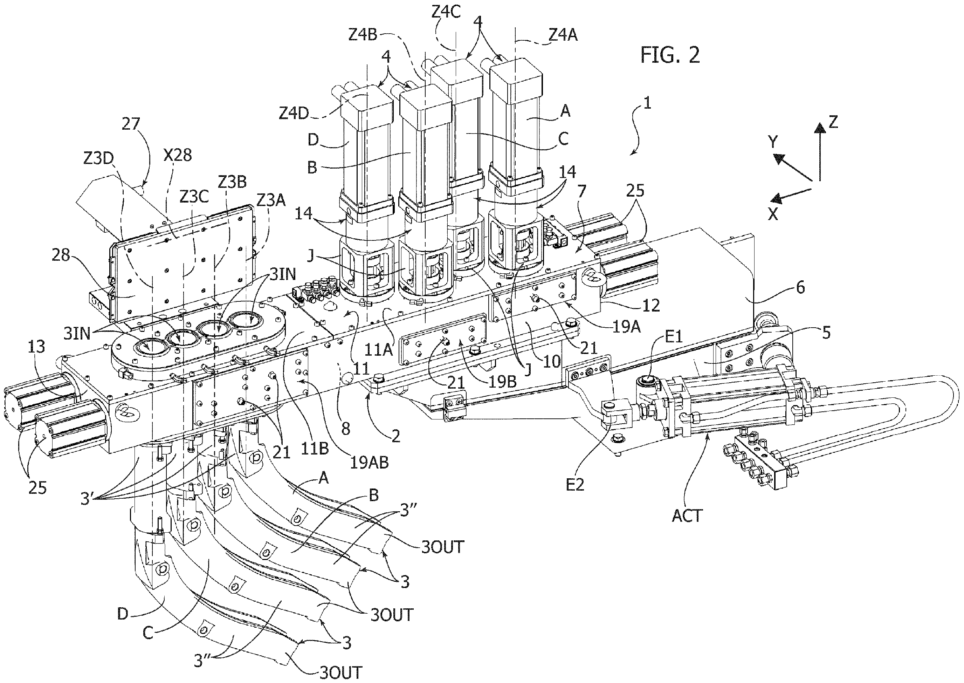

In greater detail, with reference to Figures 1 and 2, in the embodiment illustrated four distributor scoops 3 are provided, each of which is distinguished by a supplementary reference A, B, C or D and which are mounted oscillating about corresponding axes of rotation Z3A, Z3B, Z3C, Z3D. All the axes Z3A, Z3B, Z3C, Z3D are mutually parallel and aligned and generally have a vertical orientation. Each distributor scoop includes an inlet 3IN configured for receiving the gobs of molten glass and an outlet 3OUT, and further includes a first straight vertical stretch 3' of a length that increases progressively from the scoop 3A to the scoop 3D, and a deflector channel 3" downstream of the first stretch 3'.

The motors 4 are mounted on the supporting frame 2 with axes of rotation that are also mutually parallel and generally vertical. In greater detail, in the illustrated embodiment four electric motors 4 are provided, each of which is distinguished by the supplementary reference A, B, C, D for association with the corresponding scoops 3 to which they are operatively connected.

The axes of rotation of the electric motors 4 are thus identified by the references Z4A, Z4B, Z4C, Z4D, and are arranged aligned in pairs staggered with respect to one another in a longitudinal direction (direction X) and set apart in a transverse direction (direction Y) in a way at least roughly resembling a quincuncial arrangement.

With reference to Figures 1 and 2, the supporting frame 2 includes a fixed bracket 5, a mobile bracket 6 articulated with respect to the fixed bracket 5 about a (vertical) axis of rotation Z6, and a transmission box 7 fixed to the mobile bracket 6. The transmission box 7 is the element of the supporting frame 2 connected to which are all the motors 4 and all the distributor scoops 3 and which contains the mechanical transmissions that connect the scoops 3 to the motors 4 for operation.

Driving in rotation of the mobile bracket 6 with respect to the fixed bracket 5 is preferentially obtained by means of a linear actuator ACT (of a pneumatic type or alternatively of a hydraulic type), which has a first end E1 hinged to the fixed bracket 5 and a second end E2 hinged to the mobile bracket 6.

With combined reference to Figures 1, 2, and 3, the transmission box 7 has the shape of a parallelepiped including a bottom wall 8, a first side wall 9 and a second side wall 10 opposite to one another, a top wall 11 (preferentially obtained by means of a first plate 11A and a second plate 11B set alongside one another), and a first end wall 12 and a second end wall 13 opposite to one another.

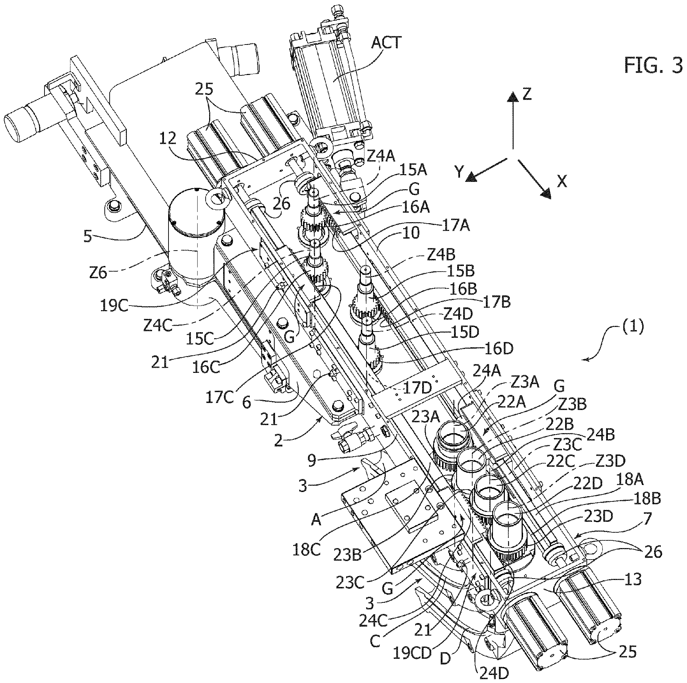

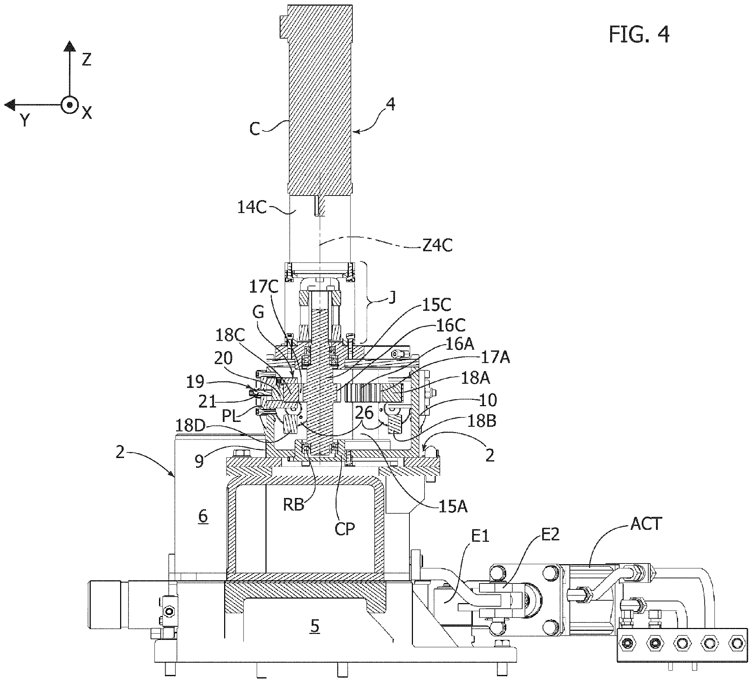

With reference in particular to Figures 3 and 4, each motor 4 is installed on the top wall 11 by interposition of a coaxial reducer 14 (for example, an epicyclic reducer) and a joint J. By means of the reducer 14 the rotational motion is taken up by an output shaft of the motor 4, and by means of the joint J the rotational motion is transmitted to a shaft 15, whereon a first pinion 16 is interference fitted or made of a single piece therewith (for transmission of a torque) is a first pinion 16. Both the shaft 15 and the pinion 16 are coaxial to the corresponding axis Z4A-D.

In the figures, the references 15 and 16 are always presented in association with the letters A-D used for the scoops 3 and the motors 4 so as to establish a unique association with the corresponding scoops 3A-3D and motors 4A-4D.

With reference to Figures 3 and 4, installed within the transmission box 7 are the four shafts 15A-15D, the vertical axes of which coincide with the axes Z4A-Z4D, respectively. Each shaft 15A-15D is rotatably mounted within the transmission box 7, and in this embodiment each of them is supported by respective rolling bearings RB housed in cups CP fixed to the bottom wall 8.

The shafts 15A-15D are in identical pairs and differ from one another basically in the axial position of the first pinions 16A-16D.

In particular, the shafts 15A and 15C carry the corresponding pinions 16A-16C in a substantially intermediate position such that, once the shafts are installed in the transmission box 7, they are located in the proximity of the top wall 11.

Instead, the shafts 15B, 15D carry the respective pinions 16B, 16D in a position close to the end that is to be inserted into the rolling bearing RB, hence such that the pinions 16B, 16D are located in a position closer to the bottom wall 8 once the shafts have been installed in the transmission box 7. According to the arrangement of the shafts 15A-15D and of the pinions 16A-16D, four meshing bands are defined, which are located in pairs in the proximity of a corresponding side wall 9, 10 and where the meshing bands of each pair have heights from the bottom wall 8 that differ from one another but are identical between homologous bands.

In other words, defined in the proximity of each side wall is an upper meshing band associated to the pinions 16A, 16C and a lower meshing band associated to the pinions 16B, 16D, wherein the upper bands have the same height from the bottom wall, as well as the lower bands, but the height differs from lower to upper bands.

On account of this - with combined reference to Figures 3 and 4 - the pinions 16A, 16B, 16C, 16D mesh with corresponding first rack sectors 17A, 17B, 17C, 17D, which are fixed, respectively, to rods 18A, 18B, 18C, 18D that are slidable in a longitudinal direction, wherein the rods 18A-D and the rack sectors 17A-17D are located in a position corresponding to the upper and lower meshing bands.

In greater detail, the first rack sectors 17A, 17C with the respective rods 18A and 18C are located in a position corresponding to each upper meshing band, in particular, the upper meshing band close to the wall 9 for the sector 17A and the rod 18A, and the upper meshing band close to the wall 10 for the sector 17C and the rod 18C.

The rack sectors 17B, 17D with the respective rods 18B and 18D are located in a position corresponding to each lower meshing band, in particular, the lower meshing band close to the wall 9 for the sector 17D and the rod 18D, and the lower meshing band close to the wall 10 for the sector 17B and the rod 18B.

Each rod 18A-18D is supported by a longitudinal guide G, which is set substantially in a position corresponding to each rack sector 17A-17D and is defined by a pair of plates orthogonal to the wall 9 or to the wall 10 (according to the rod considered) between which the corresponding rod is set.

Moreover associated to each guide G is a device for recovering meshing backlash between the pinion 16 and the corresponding rack sector 17, which is designated as a whole by the reference number 19 and the letter A-D to establish a unique association with the pinion-rack pairs.

Each backlash recovery device 19A-19D includes a gib 20 that is kept in an abutment condition against the rod 18A-18D by a screw 21 screwed into a plate PL fixed to the wall 9 or 10 (according to the device 19 considered).

Arranged in a position close to the end wall 13 are four sleeves 22A, 22B, 22C, 22D, which are connected in rotation to the scoops 3A, 3B, 3C, 3D, respectively, and consequently have the same axis of rotation Z3A-Z3D. Each sleeve 22A, 22B, 22C, 22D bears, interference fitted thereon or made in a single piece therewith, a second pinion 23A, 23B, 23C, 23D, which is thus also connected in rotation to the corresponding scoop 3A, 3B, 3C, 3D and meshes with a corresponding second rack sector 24A, 24B, 24C, 24D fixed to the rod 18A, 18B, 18C, 18D, respectively. This means that the rack sectors 24A and 24C, as well as the pinions 23A and 23C meshing therewith, are set in a position corresponding to the upper meshing bands, whereas the rack sectors 24B and 24D, as well as the pinions 23B and 23D meshing therewith, are set in a position corresponding to the lower meshing bands. Furthermore, this implies that also the sleeves 22A, 22B, 22C, 22D are pairwise identical, with the sole difference between the pairs being in the different axial positioning of the pinions 23A, 23B, 23C, 23D along the body of the sleeve.

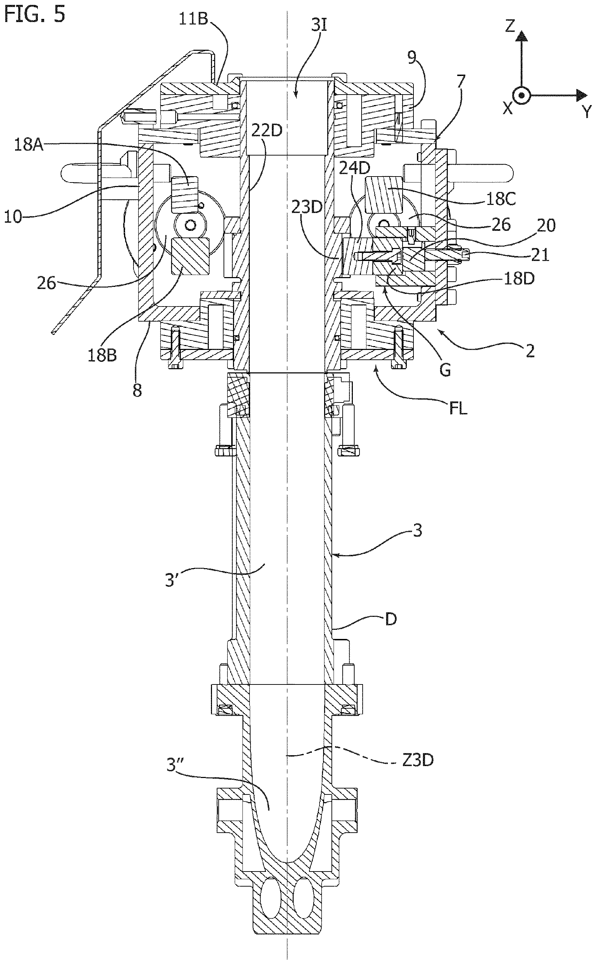

It should moreover be noted that each sleeve 22A-22D is hollow and forms the inlet 3IN of the corresponding scoop 3A-3D and is supported with respect to the transmission box 7 by a non-rolling bearing obtained by means of a flange FL (Figure 5).

Also in this case, the rods 18 are supported by the guides G (which are identical to the previous ones) set in positions corresponding to the rack sectors 24A-24D, and each of them includes a device 19 for recovering the meshing backlash between the pinion 23 and the rack sector 24.

Given that in this embodiment the backlash-recovery devices 19 are installed in pairs on a single plate, wherein each plate is located on a corresponding one of the walls 9 and 10, the supplementary reference adopted consists of a pair of letters.

In particular, provided on the wall 10 is a backlash-recovery device 19AB including two screws 21, one for a gib 20 that bears upon the rack sector 24A, and the other for the gib 20 that bears upon the rack sector 24B, whilst provided on the wall 9 is a backlash-recovery device 19CD including two screws 21, one for a gib 20 that bears upon the rack sector 24C, and the other for a gib 20 that bears upon the rack sector 24D. Of course, it is alternatively possible to provide completely separate backlash-recovery devices 19, as in the case of the devices 19A-D that compensate the meshing backlash between the pinions 16 and the rack sectors 17.

However, in this embodiment grouping of two backlash-recovery devices on a single plate is preferable on account of the smaller longitudinal centre-to-centre distance of the scoops 3 with respect to the longitudinal centre-to-centre distance that characterizes the motors 4.

Irrespective of the embodiment chosen and of whether the backlash-recovery devices 19 are associated to the pinion 16/sector 17 pairs or to the pinion 23/sector 24 pairs, they can alternatively be obtained by replacing the screw 21 with a pin preloaded by a spring against the gib 20, thus defining an automatic and continuous backlash-recovery device, which does not call for any external intervention.

Fixed to each end wall 12, 13 is a pair of pneumatic actuators 25, the stems of which carry a plate 26 configured for bearing upon a corresponding one of the ends of the rods 18A-18D, in particular during extraction of the stem itself, this consequently bringing the rods 18A-18D into a neutral position corresponding to the condition illustrated in Figure 3, where all the scoops 3 are aligned along the longitudinal axis of the dispenser 1; i.e., they are aligned along the centreline of the transmission box 7.

Finally, fixed on the top wall of the transmission box 7 is a deflector device 27 which enables, if necessary, rejection of the gobs of glass that would otherwise enter the inlets 3IN of the scoops 3. The deflector 27 is per se known and includes a deflector plate 28 that can be driven in rotation about a longitudinal axis X28 by means of a linear actuator, thus shielding the inlets 3IN from the gobs of molten glass that arrive from the hopper and from the feeder arranged above the inlets.

Operation of the dispenser 1 is described in what follows.

Each scoop 3A, 3B, 3C, 3D is configured for serving a plurality of troughs connected to the mouths of parison moulds for hollow glass articles (not shown) by conveying gobs of molten glass, which come from the feeder and enter the inlets 3IN, into the troughs through the outlets 3OUT.

To achieve this, each scoop 3A, 3B, 3C, 3D is driven in rotation about the respective axis Z3A, Z3B, Z3C, Z3D by a corresponding motor 4A, 4B, 4C, 4D in a completely independent way and with an intermittent movement along a circular sector at which the mouths of the troughs with which the outlet 3OUT is sequentially set in communication give out.

In particular, the person skilled in the art will appreciate that each motor 4A-4D is operatively connected for operation to a corresponding and distinct scoop 3A-3D thanks to a mechanical transmission defined by the kinematic chain constituted by the motor reducer 14, the joint J, the shaft 15, the pinion 16, the rack sector 17, the rod 18, the rack sector 24, the pinion 23, and the sleeve 22, where each mechanical transmission is completely independent of the other mechanical transmissions.

The rotational motion of each scoop 3 is governed by driving in rotation the corresponding motor 4, which transmits the rotational motion to the shaft 15 through the reducer 14 and the joint J. The rotational motion of the shaft 15 is converted into a linear motion of the rod 18 thanks to meshing between the pinion 16 and the rack sector 17. The same linear motion is converted into rotational motion of the sleeve 22 and of the scoop 3 about the corresponding axis Z3(A-D) thanks to meshing between pinion 23 and rack sector 24. The motors 4 are preferentially of a brushless type given the greater flexibility in control that characterizes this type of motor.

In the case where the electric power supply were to be cut off as a consequence of a failure (or upon occurrence of any one other emergency condition), the control unit of the dispenser 1 issues a command for extraction of the stems of the actuators 25 in such a way that the plates 26 bring the rods 18A-18D, by pushing them, into a neutral central position (see Figures 1-3) in which the scoops 3 are all aligned in a longitudinal direction corresponding to the centreline of the transmission box 7.

In order to guarantee the conditions of optimal lubrication of all the transmission members, the transmission box 7 is filled with lubricating oil that limits wear of the moving parts, especially where meshing takes place between the pinions 16, 23 and the rack sectors 17, 24, moreover lubricating also the bearing defined by the flange FL, and providing it with the features of a hydrodynamic bearing.

Should the wear of the toothings of the pinions 16, 23 and of the rack sectors 17, 24 give rise to non-tolerable meshing backlash, this backlash can be recovered by acting on the screws 21, in particular by screwing the latter deeper into the corresponding plates 22 in order to reduce the backlash between the pinions 16, 23 and the rack sectors 17, 24 by means of the gibs 20. In the case where pins preloaded by springs were to be used instead of the screws 21, recovery of the backlash would be obtained automatically in so far as the springs would keep always and in any case a close meshing between the pinions 16, 23 and the rack sectors 17, 24.

Not only this, but considering that for delivery of the gobs of molten glass each scoop 3 (and the corresponding transmission) must execute a working cycle in which it alternates rotations of variable amplitude and direction (clockwise and counterclockwise), the devices 19 for recovering the meshing backlash between the pinions 16A, 16B, 16C, 16D, 23A, 23B, 23C, 23D and the rack sectors 17A, 17B, 17C, 17D, 24A, 24B, 24C, 24D make it possible to guarantee in all cases proper mating between the toothed members in order to reduce to a minimum the impacts between the teeth during reversal of motion.

The advantages of the dispenser 1 as compared to dispensers of a known type include a greater precision in the distribution of the gobs of molten glass not only thanks to the possibility of controlling independently the oscillating motion of the scoops 3, but also and above all thanks to the features of the mechanical transmissions that connect the motors 4 and the scoops 3. In fact, the mechanical transmissions used in the dispenser 1 according to the invention chiefly exploit a double meshing between the pinion and the rack, i.e., a first meshing between first pinions 16A, 16B, 16C, 16D and first rack sectors 17A, 17B, 17C, 17D, and a second meshing between second pinions 23A, 23B, 23C, 23D and second rack sectors 24A, 24B, 24C, 24D. Meshing between the pinion and the rack is substantially free from phenomena of resonance and/or drastic reduction in stiffness at the typical frequencies of operation of the dispenser 1, irrespective of the processing rate considered, which always affords an optimal position of the scoops 3 with respect to the inlets of the troughs associated to the parison moulds. Furthermore, the rack sectors are mounted on the rods 18A, 18B, 18C, 18D, which are also substantially free from phenomena of resonance and/or drastic reduction in stiffness at the typical frequencies of operation of the dispenser 1. Moreover, assembly of the rack sectors does not envisage interposition of any member potentially yielding (dynamically) at the aforesaid operating frequencies, which contributes to maintaining unaltered the performance and precision of the dispenser 1 over the entire range of processing rates of interest.

Any possible errors of positioning of the scoops 3 with respect to the troughs associated to the parison moulds can of course be compensated independently for each individual scoop and as a function of the position that the scoop occupies at a given moment (internal or external with respect to the array of parison moulds) thanks to the independent operation of the scoops.

Furthermore, operation of the scoops 3 is intrinsically faster thanks to the lower inertia of rotation of the kinematic chain driven by each individual motor 4. This is basically due to the fact that each motor has to balance the inertia of rotation of a single scoop 3 (net of the inertia of the kinematic chain), contrary to what occurs with dispensers of a known type, where the inertia of rotation is the sum of the contributions of all the scoops connected to the single and shared mechanical transmission.

It is to be noted, however, that in the case where the application so allows, it is also possible to reduce the number of motors 4, for example by assigning to each of them operation of two scoops 3 (with consequent modification of the kinematic chain, for example with association of the pinions in pairs - instead of individually - to a distinct rack sector). The performance would be slightly lower in terms of inertia of rotation and positioning precision, but in any case still markedly higher as compared to dispensers of a known type, and in any case superior in terms of positioning precision on account of the better dynamic characteristics of the mechanical transmissions adopted.

More in general, whatever the configuration chosen, the dispenser 1 according to the invention can be made according to various embodiments wherein a plurality of motors 4 and a plurality of scoops 3 is provided and wherein each motor 4 is operatively connected for operation to at least one scoop 3 in rotation about the corresponding axis Z3. In other words, the ratio between the number of scoops 3 and the number of motors 4 must always be equal to or higher than unity, with the minimum number of motors 4 equal to or greater than two (in some alternative embodiments, two or three motors 4 are, for example, provided).

Among additional advantages it is to be pointed out that, unlike dispensers of a known type wherein the distributor scoops form part of a removable and replaceable assembly, in the dispenser 1 according to the invention the section to which the scoops are coupled is integrated in the dispenser itself in so far as it forms part of the transmission box 7. This guarantees a greater precision of assembly, a greater stiffness, and a greater reliability in so far as the mechanical transmissions between the motors 4 and the scoops 3 (i.e., the assemblies constituted by the first rack sector, the first pinions, the sliding rod, the second rack sector, and the second pinion) form part of just the single transmission box 7, which moreover contains a bath of lubricating oil. However, it is possible to envisage embodiments in which the transmission box 7 is divided into two independent compartments, one associated to the motors 4 and the other associated to the scoops 3, in order to render the latter compartment removable and replaceable.

Furthermore, thanks to provision of the mobile bracket 6, the transmission box 7 is able to turn through approximately 45° to enable convenient and safe access to the mechanism in emergency conditions.

Of course, the details of construction and the embodiments may vary widely with respect to what has been described and illustrated herein, without thereby departing from the sphere of protection of the present invention, as defined in the annexed claims.

## Claims

1. A dispenser (1) for gobs of molten glass for a hollow glass forming machine, including:
- a support frame (2, 5, 6, 7),
- a plurality of distributor scoops (3A, 3B, 3C, 3D) carried by said support frame (2, 5, 6, 7) and mounted oscillating about corresponding axes of rotation (Z3A, Z3B, Z3C, Z3D), wherein each distributor scoop (3A, 3B, 3C, 3D) is configured to convey a gob of molten glass towards corresponding parison moulds of a hollow glass forming machine,
- a plurality of motors (4A, 4B, 4C, 4D) configured for the operation of said plurality of distributor scoops (3A, 3B, 3C, 3D) around the corresponding axes of rotation (Z3A, Z3B, Z3C, 23D), wherein each motor (4A, 4B, 4C, 4D) of said plurality is operatively connected for operation to at least one of said plurality of distributor scoops (3A, 3B, 3C, 3D), wherein said support frame (2, 5, 6, 7) includes a gearbox (7) which carries said plurality of motors (4A, 4B, 4C, 4D) and houses a plurality of mechanical transmissions that connect said plurality of motors (4A, 4B, 4C, 4D) to corresponding distributor scoops (3A, 3B, 3C, 3D) for the operation thereof, the dispenser (1) being **characterized in that** each mechanical transmission includes a rod (18A, 18B, 18C, 18D) carrying a first rack sector (17A, 17B, 17C, 17D) and a second rack sector (24A, 24B, 24C, 24D), wherein the first rack sector (17A, 17B, 17C, 17D) meshes with a first pinion (16A, 16B, 16C, 16D) configured for receiving the motion from a corresponding motor (4A, 4B, 4C, 4D) of said plurality, while the second rack sector (24A, 24B, 24C, 24D) meshes with a second pinion (23A, 23B, 23C, 23D) connected in rotation to a corresponding distributor scoop (3A, 3B, 3C, 3D) of said plurality.

2. The dispenser (1) according to claim 1, wherein each motor (4A, 4B, 4C, 4D) is operatively connected for operation to a single corresponding distributor scoop (3A, 3B, 3C, 3D).

3. The dispenser (1) according to claim 1 or 2, wherein each first pinion (16A, 16B, 16C, 16D) is carried by a shaft (15A, 15B, 15C, 15D) rotatably mounted within said gear box (7) and connected in rotation to an output shaft of corresponding motor (4A, 4B, 4C, 4D) of said plurality.

4. The dispenser (1) according to any of claims 1 to 3, wherein each second pinion (23A, 23B, 23C, 23D) is carried by a sleeve (22A, 22B, 22C, 22D) connected in rotation to a corresponding distributor scoop (3A, 3B, 3C, 3D) of said plurality, wherein each sleeve (22A, 22B, 22C, 22D) is hollow and defines an inlet (3IN) of the corresponding distributor scoop (3A, 3B, 3C, 3D).

5. The dispenser (1) according to any of claims 2 to 4, including four motors (4A, 4B, 4C, 4D), each operatively connected for operation to a corresponding and distinct distributor scoop (3A, 3B, 3C, 3D), wherein inside said gearbox (7) four longitudinally slidable rods (18A, 18B, 18C, 18D) are arranged, each carrying said first and second rack sectors (17A, 17B, 17C, 17D, 24A, 24B, 24C, 24D), and wherein said rods (18A, 18B, 18C, 18D) are arranged in pairs and in proximity to opposite side walls (9, 10) of said gear box (7), and wherein the rods of each pair are arranged in a superimposed position and borne by linear guides (G).

6. The dispenser (1) according to claim 5, wherein a first pair of first pinions (16A, 16C) meshes with a first pair of first rack sectors (17A, 17C), each arranged in correspondence of a respective upper meshing band, and wherein a second pair of first pinions (16B, 16D) meshes with a second pair of first rack sectors (17B, 17D), each arranged in correspondence of a respective lower meshing band, wherein the upper meshing bands and lower meshing bands have a different height with respect to a bottom wall (8) of the gear box (7).

7. The dispenser (1) according to claim 5 or claim 6, wherein a first pair of second pinions (23A, 23C) meshes with a first pair of second rack sectors (24A, 24C), each arranged in correspondence of the respective upper meshing band, and wherein a second pair of second pinions (23B, 23D) meshes with a second pair of second rack sectors (24B, 24D), each arranged in correspondence of the respective lower meshing band.

8. The dispenser (1) according to any of claims 5 to 7, including a clearance recovery device (19A, 19B, 19C, 19D, 19AB, 19CD) associated to each meshing between rack sector (17A, 17B, 17C, 17D, 24A, 24B, 24C, 24D) and corresponding pinion (16A, 16B, 16C, 16D, 23A, 23B, 23C, 23D), wherein said clearance recovery device (19A, 19B, 19C, 19D, 19AB, 19CD) includes a gib (20) configured to abut on the corresponding rack sector (17A, 17B, 17C, 17D, 24A, 24B, 24C, 24D) and closing the meshing clearance between rack sector (17A, 17B, 17C, 17D, 24A, 24B, 24C, 24D) and corresponding pinion (16A, 16B, 16C, 16D, 23A, 23B, 23C, 23D).

9. The dispenser (1) according to claim 8, wherein said gib (20) abuts on the corresponding rack sector (17A, 17B, 17C, 17D, 24A, 24B, 24C, 24D) by means of the action of, alternatively:
- a screw (21), or
- a pin pre-loaded by means of a spring.

10. The dispenser (1) according to any of the previous claims, further including two pairs of linear actuators (25) fixed to opposite head walls (12, 13) of said gearbox (7), said linear actuators (25) being configured, upon the occurrence of an emergency situation, to bring said rods (18A, 18B, 18C, 18D) in a neutral central position such that each distributor scoop (3A, 3B, 3C, 3D) is aligned along a longitudinal direction (X) in correspondence of the centerline of said gear box (7).

## Patentansprüche

1. Spender (1) für Posten aus geschmolzenem Glas für eine Hohlglasformungsmaschine, einschließlich:
- eines Tragrahmens (2, 5, 6, 7),
- einer Mehrzahl von Verteilerschaufeln (3A, 3B, 3C, 3D), die vom Tragrahmen (2, 5, 6, 7) getragen werden und um entsprechende Rotationsachsen (Z3A, Z3B, Z3C, Z3D), schwingend montiert sind, wobei jede Verteilerschaufel (3A, 3B, 3C, 3D) ausgelegt ist, einen Posten aus geschmolzenem Glas zu entsprechenden Vorformen einer Hohlglasformungsmaschine zu befördern,
- einer Mehrzahl von Motoren (4A, 4B, 4C, 4D), die zum Betrieb der Mehrzahl von Verteilerschaufeln (3A, 3B, 3C, 3D) um die entsprechenden Rotationsachsen (Z3A, Z3B, Z3C, Z3D) ausgelegt sind, wobei jeder Motor (4A, 4B, 4C, 4D) der Mehrzahl zum Betrieb mit zumindest einer der Mehrzahl von Verteilerschaufeln (3A, 3B, 3C,3D) wirkverbunden ist, wobei der Tragrahmen (2, 5, 6, 7) einen Getriebekasten (7) einschließt, der die Mehrzahl von Motoren (4A, 4B, 4C, 4D) trägt und eine Mehrzahl mechanischer Getriebe aufnimmt, welche die Mehrzahl der Motoren (4A, 4B, 4C, 4D) mit entsprechenden Verteilerschaufeln (3A, 3B, 3C, 3D) zum Betrieb derselben verbindet, wobei der Spender (1) **dadurch gekennzeichnet ist, dass** jedes mechanische Getriebe eine Stange (18A, 18B, 18C, 18D) einschließt, die einen ersten Rackabschnitt (17A, 17B, 17C, 17D) und einen zweiten Rackabschnitt (24A, 24B, 24C, 24D) trägt, wobei der erste Rackabschnitt (17A, 17B, 17C, 17D) mit einem ersten Ritzel (16A, 16B, 16C, 16D) kämmt, das ausgelegt ist, die Bewegung eines entsprechenden Motors (4A, 4B, 4C, 4D) der Mehrzahl aufzunehmen, während der zweite Rackabschnitt (24A, 24B, 24C, 24D) mit einem zweiten Ritzel (23A, 23B, 23C, 23D) kämmt, das mit einer entsprechenden Verteilerschaufel (3A, 3B, 3C, 3D) der Mehrzahl in Rotation verbunden ist.

2. Spender (1) nach Anspruch 1, wobei jeder Motor (4A, 4B, 4C, 4D) zum Betrieb mit einer einzelnen entsprechenden Verteilerschaufel (3A, 3B, 3C, 3D) wirkverbunden ist.

3. Spender (1) nach Anspruch 1 oder 2, wobei jedes erste Ritzel (16A, 16B, 16C, 16D) durch eine Welle (15A, 15B, 15C, 15D) getragen wird, die drehbar innerhalb des Getriebekastens (7) montiert und in Rotation mit einer Abtriebswelle des entsprechenden Motors (4A, 4B, 4C, 4D) der Mehrzahl verbunden ist.

4. Spender (1) nach einem der Ansprüche 1 bis 3, wobei jedes zweite Ritzel (23A, 23B, 23C, 23D) durch eine Hülse (22A, 22B, 22C, 22D) getragen wird, die mit einer entsprechenden
Verteilerschaufel (3A, 3B, 3C, 3D) der Mehrzahl in Rotation verbunden ist, wobei jede Hülse (22A, 22B, 22C, 22D) hohl ist und einen Einlass (3IN) der entsprechenden Verteilerschaufel (3A, 3B,3C, 3D) definiert.

5. Spender (1) nach einem der Ansprüche 2 bis 4, einschließlich vierer Motoren (4A, 4B, 4C, 4D), die jeder zum Betrieb mit einer entsprechenden und gesonderten Verteilerschaufel (3A, 3B, 3C, 3D) wirkverbunden sind, wobei innerhalb des Getriebekastens (7) vier längs verschiebbare Stangen (18A, 18B, 18C, 18D) angeordnet sind, die jede den ersten und den zweiten Rackabschnitt (17A, 17B, 17C, 17D, 24A, 24B, 24C, 24D) tragen, und wobei die Stangen (18A, 18B, 18C, 18D) paarweise und in der Nähe von gegenüberliegenden Seitenwänden (9, 10) des Getriebekastens (7) angeordnet sind und wobei die Stangen jedes Paars in einer überlagerten Position angeordnet sind und durch lineare Führungen (G) getragen werden.

6. Spender (1) nach Anspruch 5, wobei ein erstes Paar erster Ritzel (16A, 16C) mit einem ersten Paar erster Rackabschnitte (17A, 17C) kämmt, die jeder in Entsprechung mit einem jeweiligen oberen kämmenden Band angeordnet sind, und wobei ein zweites Paar erster Ritzel (16B, 16D) mit einem zweiten Paar erster Rackabschnitte (17B, 17D) kämmt, die jeder in Entsprechung mit einem jeweiligen unteren kämmenden Band angeordnet sind, wobei die oberen kämmenden Bänder und unteren kämmenden Bänder eine unterschiedliche Höhe bezüglich einer unteren Wand (8) des Getriebekastens (7) aufweisen.

7. Spender (1) nach Anspruch 5 oder Anspruch 6, wobei ein erstes Paar zweiter Ritzel (23A, 23C) mit einem ersten Paar zweiter Rackabschnitte (24A, 24C) kämmt, die jeder in Entsprechung mit dem jeweiligen oberen kämmenden Band angeordnet sind, und wobei ein zweites Paar zweiter Ritzel (23B, 23D) mit einem zweiten Paar zweiter Rackabschnitte (24B, 24D) kämmt, die jeder in Entsprechung mit dem jeweiligen unteren kämmenden Band angeordnet sind.

8. Spender (1) nach einem der Ansprüche 5 bis 7, einschließlich einer Spielausgleichsvorrichtung (19A, 19B,19C, 19D, 19AB, 19CD), die jedem Kämmeingriff zwischen Rackabschnitt (17A, 17B, 17C, 17D, 24A, 24B, 24C, 24D) und entsprechendem Ritzel (16A, 16B, 16C, 16D, 23A, 23B, 23C, 23D) zugeordnet ist, wobei die Spielausgleichsvorrichtung (19A, 19B, 19C, 19D, 19AB, 19CD) einen Bolzen (20) einschließt, der ausgelegt ist, am entsprechenden Rackabschnitt (17A, 17B, 17C, 17D, 24A, 24B, 24C, 24D) anzuliegen, und das Flankenspiel zwischen Rackabschnitt (17A, 17B, 17C, 17D, 24A, 24B, 24C, 24D) und entsprechendem Ritzel (16A, 16B, 16C, 16D, 23A, 23B, 23C, 23D) schließt.

9. Spender (1) nach Anspruch 8, wobei jeder Bolzen (20) durch das Einwirken:
- einer Schraube (21) oder
- eines federvorgespannten Stifts
am entsprechenden Rackabschnitt (17A, 17B, 17C, 17D, 24A, 24B, 24C, 24D) anliegt.

10. Spender (1) nach einem der vorangehenden Ansprüche, ferner umfassend zwei Paare linearer Aktuatoren (25), die an gegenüberliegenden Kopfwänden (12, 13) des Getriebekastens (7) befestigt sind, wobei die linearen Aktuatoren (25) ausgelegt sind, beim Auftreten einer Notsituation die Stangen (18A, 18B, 18C, 18D) in eine neutrale mittlere Position zu bringen, sodass jede Verteilerschaufel (3A, 3B, 3C, 3D) entlang einer Längsrichtung (X) in Entsprechung mit der Mittellinie des Getriebekastens (7) ausgerichtet ist.

## Revendications

1. Distributeur (1) pour paraisons de verre en fusion pour une machine de formage de verre creux, comprenant :
un bâti de support (2, 5, 6, 7),
une pluralité de cuillères distributrices (3A, 3B, 3C, 3D) portées par ledit bâti de support (2, 5, 6, 7) et montées de manière oscillante autour des axes de rotation (Z3A, Z3B, Z3C, Z3D) correspondants, dans lequel chaque cuillère distributrice (3A, 3B, 3C, 3D) est configurée pour transporter une paraison de verre en fusion vers des moules ébaucheurs correspondants d'une machine de formage de verre creux,
une pluralité de moteurs (4A, 4B, 4C, 4D) configurés pour l'actionnement de ladite pluralité de cuillères distributrices (3A, 3B, 3C, 3D) autour des axes de rotation (Z3A, Z3B, Z3C, Z3D) correspondants, dans lequel chaque moteur (4A, 4B, 4C, 4D) de ladite pluralité est raccordé de manière opérationnelle pour l'actionnement d'au moins l'une de ladite pluralité de cuillères distributrices (3A, 3B, 3C, 3D), dans lequel ledit bâti de support (2, 5, 6, 7) comprend une boîte de vitesse (7) qui porte ladite pluralité de moteurs (4A, 4B, 4C, 4D) et loge une pluralité de transmissions mécaniques qui raccorde ladite pluralité de moteurs (4A, 4B, 4C, 4D) aux cuillères distributrices (3A, 3B, 3C, 3D) correspondantes pour leur actionnement, le distributeur (1) étant **caractérisé en ce que** chaque transmission mécanique comprend une tige (18A, 18B, 18C, 18D) portant un premier secteur de crémaillère (17A, 17B, 17C, 17D) et un second secteur de crémaillère (24A, 24B, 24C, 24D), dans lequel le premier secteur de crémaillère (17A, 17B, 17C, 17D) s'engrène avec un premier pignon (16A, 16B, 16C, 16D) configuré pour recevoir le mouvement d'un moteur (4A, 4B, 4C, 4D) correspondant de ladite pluralité, alors que le second secteur de crémaillère (24A, 24B, 24C, 24D) s'engrène avec le second pignon (23A, 23B, 23C, 23D) raccordé en rotation à une cuillère distributrice (3A, 3B, 3C, 3D) correspondante de ladite pluralité.

2. Distributeur (1) selon la revendication 1, dans lequel chaque moteur (4A, 4B, 4C, 4D) est raccordé, de manière opérationnelle pour l'actionnement, à une seule cuillère distributrice (3A, 3B, 3C, 3D) correspondante.

3. Distributeur (1) selon la revendication 1 ou 2, dans lequel chaque premier pignon (16A, 16B, 16C, 16D) est porté par un arbre (15A, 15B, 15C, 15D) monté en rotation à l'intérieur de ladite boîte à vitesse (7) et raccordé, en rotation, à un arbre de sortie du moteur (4A, 4B, 4C, 4D) correspondant de ladite pluralité.

4. Distributeur (1) selon l'une quelconque des revendications 1 à 3, dans lequel chaque second pignon (23A, 23B, 23C, 23D) est porté par un manchon (22A, 22B, 22C, 22D) raccordé, en rotation, à une cuillère distributrice (3A, 3B, 3C, 3D) correspondante de ladite pluralité, dans lequel chaque manchon (22A, 22B, 22C, 22D) est creux et définit une entrée (3IN) de la cuillère distributrice (3A, 3B, 3C, 3D) correspondante.

5. Distributeur (1) selon l'une quelconque des revendications 2 à 4, comprenant quatre moteurs (4A, 4B, 4C, 4D), chacun raccordé, de manière opérationnelle pour l'actionnement, à une cuillère distributrice (3A, 3B, 3C, 3D) correspondante et distincte, dans lequel à l'intérieur de ladite boîte de vitesse (7), sont agencées quatre tiges longitudinalement coulissantes (18A, 18B, 18C, 18D), chacune porte lesdits premier et second secteurs de crémaillère (17A, 17B, 17C, 17D, 24A, 24B, 24C, 24D), et dans lequel lesdites tiges (18A, 18B, 18C, 18D) sont agencées par paires et à proximité des parois latérales (9, 10) opposées de ladite boîte de vitesse (7) et dans lequel les tiges de chaque paire sont agencées dans une position superposée et portées par des guides linéaires (G).

6. Distributeur (1) selon la revendication 5, dans lequel une première paire de premiers pignons (16A, 16C) s'engrène avec une première paire de premiers secteurs de crémaillère (17A, 17C), chacun agencé en correspondance d'une bande d'engrènement supérieure respective, et dans lequel une seconde paire de premiers pignons (16B, 16D) s'engrène avec une seconde paire de premiers secteurs de crémaillère (17B, 17D), chacun agencé en correspondance d'une bande d'engrènement inférieure respective, dans lequel les bandes d'engrènement supérieures et les bandes d'engrènement inférieures ont une hauteur différente par rapport à une paroi inférieure (8) de la boîte de vitesse (7).

7. Distributeur (1) selon la revendication 5 ou la revendication 6, dans lequel une première paire de seconds pignons (23A, 23C) s'engrène avec une première paire de seconds secteurs de crémaillère (24A, 24C), chacun agencé en correspondance de la bande d'engrènement supérieure respective, et dans lequel une seconde paire de seconds pignons (23B, 23D) s'engrène avec une seconde paire de seconds secteurs de crémaillère (24B, 24D), chacun agencé en correspondance de la bande d'engrènement inférieure respective.

8. Distributeur (1) selon l'une quelconque des revendications 5 à 7, comprenant un dispositif de récupération de jeu (19A, 19B, 19C, 19D, 19AB, 19CD) associé à chaque engrènement entre le secteur de crémaillère (17A, 17B, 17C, 17D, 24A, 24B, 24C, 24D) et le pignon (16A, 16B, 16C, 16D, 23A, 23B, 23C, 23D) correspondant, dans lequel ledit dispositif de récupération de jeu (19A, 19B, 19C, 19D, 19AB, 19CD) comprend un lardon (20) configuré pour venir en butée sur le secteur de crémaillère (17A, 17B, 17C, 17D, 24A, 24B, 24C, 24D) correspondant et fermant le jeu d'engrènement entre le secteur de crémaillère (17A, 17B, 17C, 17D, 24A, 24B, 24C, 24D) et le pignon (16A, 16B, 16C, 16D, 23A, 23B, 23C, 23D) correspondant.

9. Distributeur (1) selon la revendication 8, dans lequel ledit lardon (20) vient en butée sur le secteur de crémaillère (17A, 17B, 17C, 17D, 24A, 24B, 24C, 24D) correspondant au moyen de l'action de, en variante :
une vis (21), ou bien
une broche pré-chargée au moyen d'un ressort.

10. Distributeur (1) selon l'une quelconque des revendications précédentes, comprenant en outre deux paires d'actionneurs linéaires (25) fixées sur des parois de tête (12, 13) opposées de ladite boîte de vitesse (7), lesdits actionneurs linéaires (25) étant configurés, suite à l'occurrence d'une situation d'urgence, pour amener lesdites tiges (18A, 18B, 18C, 18D) dans une position centrale neutre de sorte que chaque cuillère distributrice (3A, 3B, 3C, 3D) est alignée le long d'une direction longitudinale (X) en correspondance de la ligne médiane de ladite boîte de vitesse (7) .
